(19) Europäisches Patentamt
European Patent Office
Office européen des brevets

(11) **EP 2 722 376 A1**

(12) **EUROPEAN PATENT APPLICATION**
published in accordance with Art. 153(4) EPC

(43) Date of publication:
**23.04.2014 Bulletin 2014/17**

(51) Int Cl.:
**C09J 7/02** (2006.01)

(21) Application number: **12801249.9**

(22) Date of filing: **21.05.2012**

(86) International application number:
**PCT/JP2012/062951**

(87) International publication number:
**WO 2012/172932 (20.12.2012 Gazette 2012/51)**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **17.06.2011 JP 2011135135**
**18.05.2012 JP 2012114796**

(71) Applicant: **Nitto Denko Corporation**
**Ibaraki-shi**
**Osaka 567-8680 (JP)**

(72) Inventors:
• **YAMAMOTO, Mitsushi**
**Ibaraki-shi**
**Osaka 567-8680 (JP)**
• **HAYASHI, Keiji**
**Ibaraki-shi**
**Osaka 567-8680 (JP)**

(74) Representative: **Grünecker, Kinkeldey,**
**Stockmair & Schwanhäusser**
**Leopoldstrasse 4**
**80802 München (DE)**

(54) **ADHESIVE FILM**

(57)     Provided is a pressure-sensitive adhesive film suitable for an application involving cutting with a short-wavelength laser having a center wavelength of 1.0 μm to 1.1 μm. A pressure-sensitive adhesive film 1 according to the present invention comprises a resin film 10 as a substrate, and a pressure-sensitive adhesive layer 20 provided at least on a first face of resin film 10. Substrate 10 has a laser beam absorbance of 20 % or higher in a wavelength range of 1000 nm to 1100 nm, and comprises a laser beam-absorbing layer 42 comprising a laser beam-absorbing agent 402 that increases the laser beam absorbance. As laser beam-absorbing agent 402, at least one species selected from a metal powder and a metallic compound powder can be preferably used.

[Fig. 1]

**Description**

[Technical Field]

The present invention relates to a pressure-sensitive adhesive (PSA) film in which pressure-sensitive adhesive is supported on a substrate, in particular, a PSA film preferably used for applications that involve cutting with a laser beam in a specific wavelength range. The present application claims priority based on Japanese Patent Application Nos. 2011-135135 filed on June 17th, 2011 and 2012-114796 filed on May 18th, 2012, and the entire contents thereof are incorporated herein by reference.

[Background Art]

Techniques involving laser beam machining have been widely used for cutting and hole-making, etc., of various materials. Carbon dioxide laser is a typical example of a laser used for such machining processes. For instance, in an embodiment of such laser machining, a PSA film as an auxiliary material is adhered to a surface of a workpiece and a laser beam is projected onto the PSA film, whereby the workpiece along with the PSA film is processed with the laser. For example, Patent Document 1 discloses a technique to increase hole-making reliability or workability, ete., by pressure-bonding an auxiliary PSA sheet to a copper foil surface of a copper-clad board and projecting a carbon dioxide laser onto the auxiliary PSA sheet to make holes to the copper-clad board.

[Citation List]

[Patent Literature]

[Patent Document 1] Japanese Patent Application Publication No. 2004-235194

[Summary of Invention]

[Technical Problem]

Recently, there is growing interest in machining techniques using a short-wavelength laser beam. For example, in place of a carbon dioxide laser (with a center wavelength of about 9.3 $\mu$m to 10.6 $\mu$m), there is a demand for laser machining using a short-wavelength laser having a center wavelength of about 1.0 $\mu$m to 1.1 $\mu$m. In laser machining using such a short-wavelength laser beam, however, use of a PSA film in the same way as it had been used for carbon dioxide laser machining sometimes failed to make a high-quality cut in the PSA film and resulted in decreased efficiency or accuracy in the laser machining. The present invention has been made in view of such circumstances with an objective to provide a PSA film suitable for applications where the PSA film is cut with a short-wavelength laser having a center wavelength of 1.0 $\mu$m to 1.1 $\mu$m. It is noted that unlike laser abrasion, the laser beam machining technique disclosed herein relates to an ordinary laser machining such as cutting with a YAG laser having a longer pulse duration (more particularly, having a continuous output of the order of microseconds), or the like.

[Solution to Problem]

The present invention provides a PSA film comprising a resin film as a substrate, and a PSA layer provided at least on one face of the resin film. The substrate has a laser beam absorbance of 20 % or higher in a wavelength range of 1000 nm to 1100 nm. The substrate comprises a laser beam-absorbing layer comprising a laser beam-absorbing agent that increases the laser beam absorbance.

The PSA film having such a constitution comprises a substrate exhibiting a high laser beam absorbance of at least 20 % (typically 20 % to 95 %) in the wavelength range of 1000 nm to 1100 nm (or the "prescribed wavelength range" hereinafter); and therefore, it can efficiently absorb a laser beam (or a "prescribed laser beam" hereinafter) that has a center wavelength in the prescribed wavelength range. Thus, using the energy of the absorbed prescribed laser beam, the PSA film can be effectively cut (typically, the PSA film can be cut via decomposition and loss of a local part of the PSA film caused by irradiation with the prescribed laser beam).

In the present description, the term "laser beam absorbance" refers to a value determined by substituting transmittance T (%) and reflectance R (%) values measured with a spectrophotometer (e.g., spectrophotometer under model number "U-4100" available from Hitachi High-Technologies Corporation or a similar system) into the following equation (I):

$$\text{Absorbance A (\%)} = 100\,(\%) - \text{T}\,(\%) - \text{R}\,(\%) \qquad\qquad (\text{I})$$

The term "laser beam absorbance in a wavelength range of 1000 nm to 1100 nm" refers to the minimum laser beam absorbance (or "Amin(1000,1100)" hereinafter) in the wavelength range. In the present description, the term "laser beam-absorbing agent" refers to a material capable of producing an effect to turn the laser beam absorbance Amin(1000,1100) higher than in the corresponding resin film free of the laser beam-absorbing agent.

The laser beam-absorbing layer preferably comprises, as the laser beam-absorbing agent, at least one species selected from metal powders and metallic compound powders. Such a laser beam-absorbing agent generally has excellent thermal stability, thus, while the PSA film is heated and cut with the prescribed laser beam (typically, through thermal decomposition and loss of the resin component constituting the PSA film), it is able to adequately maintain its ability to absorb the prescribed laser beam

In a preferable embodiment of the art disclosed herein, the substrate comprises a laser beam-absorbing layer that satisfies the following conditions (1) and (2):

(1) The substrate is formed from a resin composition containing 0.01 to 5% by mass of the laser beam-absorbing agent.
(2) The laser beam absorbance is 20 % or higher, but 80 % or lower.

A substrate having such a laser beam-absorbing layer and a PSA film comprising the substrate are preferable because when cut with the prescribed laser beam, their cutting residue (typically, residue originating primarily from the laser beam-absorbing agent) is less likely to contaminate the surroundings (workpieces, devices used for laser processing, working environments, etc.). As the laser beam-absorbing agent, one, two or more species of metal powder can be preferably used. In particular, use of aluminum power is preferable.

The laser beam-absorbing layer may be a resin composition containing the laser beam-absorbing agent. Preferable examples of such a resin composition include polyolefin resin compositions and polyester resin compositions. Here, the term "polyolefin resin composition" refers to a composition comprising a polyolefin at 50 % by mass or greater (e.g., 70 % by mass or greater) of the polymer components constituting the composition. Similarly, the term "polyester resin composition" refers to a composition comprising a polyester at 50 % by mass or greater (e.g., 70 % by mass or greater) of the polymer components constituting the composition. A substrate having a laser beam-absorbing layer formed from such a resin composition, and a PSA film comprising the substrate are preferable because when cut with the prescribed laser beam, the cut width can be easily controlled and a cut edge is likely to be formed with a precisely shaped surface.

In a preferable embodiment, the laser beam-absorbing layer is formed from a resin composition containing as the laser beam-absorbing agent 0.01 to 5 % by mass of a metal powder (typically aluminum powder). Because metal powder has excellent thermal stability, while the PSA film is heated and cut with the prescribed laser beam, its ability to absorb the prescribed laser beam can be suitably maintained.

A PSA film disclosed herein has properties suitable for use in an application involving cutting with a laser beam having a center wavelength of 1000 nm to 1100 nm. Thus, in another aspect, the present invention provides a laser cutting PSA film consisting of a PSA film disclosed herein, which is to be cut with a laser beam having a center wavelength of 1000 nm to 1100 nm when in use.

[Brief Description of Drawings]

Fig. 1 shows a cross-sectional view schematically illustrating a constitutional example of the PSA film according to the present invention.
Fig. 2 shows a cross-sectional view schematically illustrating another constitutional example of the PSA film according to the present invention.
Fig. 3 shows a cross-sectional view schematically illustrating another constitutional example of the PSA film according to the present invention.
Fig. 4 shows a cross-sectional view schematically illustrating a typical example of a state of the PSA film when cut adequately with a laser beam.
Fig. 5 shows a cross-sectional view schematically illustrating a typical example of a state of the PSA film when cut inadequately with a laser beam.

[Embodiments of Invention]

Preferred embodiments of the present invention are described below. Matters necessary to practice this invention other than those specifically referred to in this description may be understood as design matters to a person of ordinary skills in the art based on the conventional art in the pertinent field. The present invention can be practiced based on the contents disclosed in this description and common technical knowledge in the subject field. In the description below, all members and sites providing the same effect are indicated by a common reference numeral, and redundant descriptions may be omitted or simplified.

The PSA film disclosed herein comprises a PSA layer at least on a first face of a resin film as a substrate. It may be a single-faced PSA film (an adhesively single-faced PSA film) having a PSA layer only on the first face of the substrate, or it may be a double-faced PSA sheet (an adhesively double-faced PSA film) having a PSA layer on each of the first and second faces of the substrate. Hereinafter, the present invention is described more in detail with a main example being an embodiment where it is applied to a single-faced PSA film while the application of the art disclosed herein is not to be limited to such an embodiment.

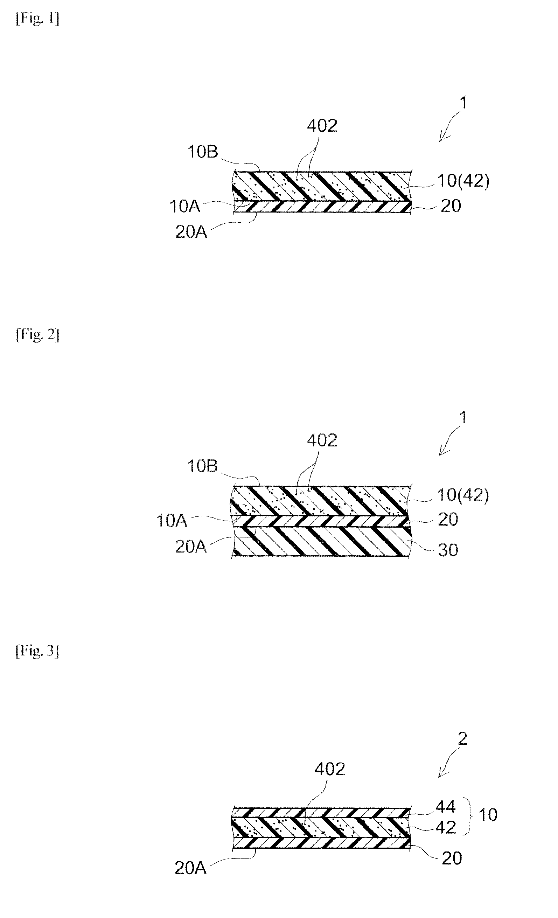

Fig. 1 shows a typical constitutional example of the PSA film provided by the present invention. PSA film 1 comprises resin film 10 as a substrate and a PSA layer 20 provided on a first face (single face) 10A thereof, and is used by adhering the PSA layer 20 to an adherend. In a preferable embodiment, the back face 10 B (opposite of the face provided with PSA layer 20) of resin film 10 comprises a releasable surface (release surface). Prior to use (i.e., before adhered to the adherend), PSA film 1 may be wound in a roll such that the back face 10B of resin film 10 contacts and protects a surface (adhesive face) 20A of PSA layer 20. Alternatively, as PSA film 1 shown in Fig. 2, the surface 20A of PSA layer 20 may be protected with release liner 30 having a release surface at least on the PSA layer 20 side.

Resin film 10 comprises a laser beam-absorbing layer 42 comprising a laser beam-absorbing agent 402. Laser beam-absorbing layer 42 is typically formed from a resin composition containing laser beam-absorbing agent 402. In the examples shown in Figs. 1 and 2, resin film 10 has a mono-layer structure consisting of laser beam-absorbing layer 42 while the structure of resin film 10 is not limited to a mono-layer structure. Like PSA film 2 shown in Fig. 3, for example, resin film 10 may be a laminate body containing multiple layers (here, the first layer 42 placed on the PSA layer 20 side and the second layer 44 placed on the back side thereof) of which at least one may be a laser beam-absorbing layer 42. In the example shown in Fig. 3, the first layer 42 is a layer (a laser beam-absorbing layer) formed from a resin composition containing laser beam-absorbing agent 402 while the second layer 44 is a layer formed from a resin composition free of a laser beam-absorbing agent.

In the art disclosed herein, the resin film (or the "substrate film" hereinafter) as a substrate is characterized by having an Amin(1000,1100) of 20 % or higher in a wavelength range of 1000 nm to 1100 nm. The Amin(1000,1100) indicates the actual proportion of the prescribed laser beam absorbed by the substrate film relative to the intensity of the prescribed laser beam projected onto the substrate film. An Amin(1000,1100) lower than 20 % for the substrate film will result in a low heating efficiency by projection of the prescribed laser beam, whereby adequate decomposition and loss of the substrate film and a PSA film comprising the substrate film cannot be achieved. Thus, the PSA film cannot be cut, or even if it could be cut to a certain extent, it will be hard to provide a high-quality cut consistently.

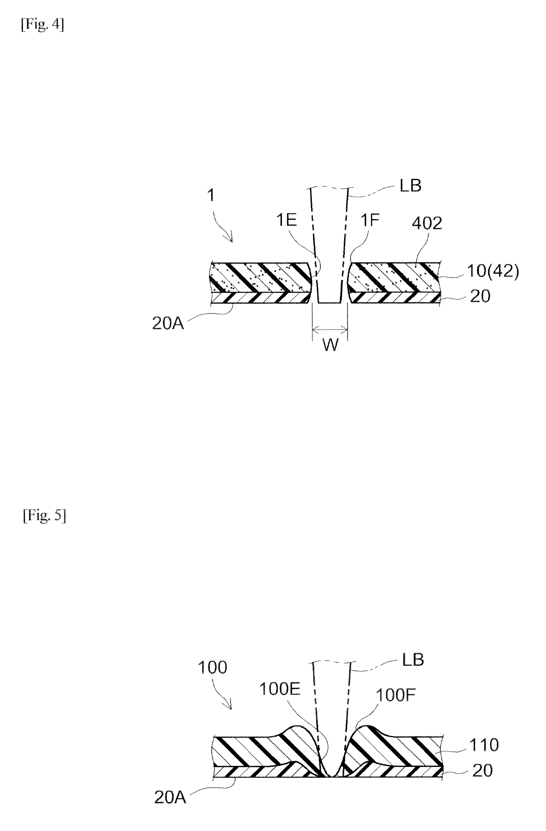

This is described with the schematic diagrams shown in Figs. 4 and 5. As shown in Fig. 5, with respect to PSA film 100 formed with resin film 110 not containing a laser beam-absorbing agent and having an Amin(1000,1100) lower than 20 %, even if an adhesive face 20A of the PSA film 100 is adhered to an adherend and a prescribed laser beam LB is projected onto its back face, the area of PSA film 100 under the projection range of the laser beam LB cannot be sufficiently heated to decompose and disappear. Because of this, PSA film 100 cannot be cut with the prescribed laser beam LB, or even if it could be cut to a certain extent, the cut is made primarily by the PSA film 100 melting down and deforming due to the heat transferred from the adherend. Thus, for example, as shown in Fig. 5, the precision cannot be increased for the shapes of a cut edge surface 100E and a projection boarder 100 F (around the border between a region projected with the laser beam and a region not projected with the laser beam) or for the cut width, etc.

To the contrary, as shown in Fig. 4, when PSA film I comprising resin film 10 having an Amen(1000,1100) of 20 % or higher is adhered to an adherend and the prescribed laser beam LB is projected onto its back face, the resin film 10 efficiently absorbs the prescribed laser beam LB to be heated, PSA film 1 is allowed to effectively decompose and disappear to result in a cut. Thus, the PSA film I can be cut with a cut width (the width of a gap formed by the laser beam projection) W being accurately controlled in accordance with the irradiation breadth of the prescribed laser beam. In typical, as shown in Fig. 4, PSA film 1 can be cut with a cut width W equal to or larger than the projection breadth (diameter) of the prescribed laser beam. A high-quality cut can be obtained with a cut edge surface 1 E and projection border 1F both precisely shaped.

As the laser beam-absorbing agent, can be used a single species or a suitable combination among various materials capable of producing an effect to increase the Amin(1000, 1100). From the standpoint ofthe external appearances, etc., of cut edge surfaces, it is preferable to use a laser beam-absorbing agent other than carbon powder. Preferable examples of the laser beam-absorbing agent in the art disclosed herein include metals and metallic compounds. Examples of the metals include aluminum, stainless steel, titanium, nickel, zirconium, tungsten, copper, silver, gold, zinc, molybdenum, chromium as well as alloys primarily comprising these, and the like. Examples of metallic compounds include oxides, nitrides, carbides, etc., of the metals. These metals and metallic compounds are preferably used as laser beam-absorbing agents typically in a powder form. Other examples of the laser beam-absorbing agent include organic compounds having a property to absorb the prescribed laser beam. Such organic compounds may be, for instance, phthalocyanine-based compounds, cyanine-based compounds, aminium-based compounds, naphthalocyanine-based compounds, naphthoquinone-based compounds, diimmonium-based compounds, anthraquinone-based compounds, aromatic dithiol-based metal complexes (e.g. nickel complexes), and the like.

In a preferable embodiment of the art disclosed herein, the laser beam-absorbing layer comprises, as the laser beam-absorbing agent, at least one of a metal powder and a metallic compound powder. Such a laser beam-absorbing agent is preferable because it can resist the heat generated upon absorption of the prescribed laser beam and suitably maintain its property to absorb the prescribed laser beam. For example, in a laser beam-absorbing layer containing a laser beam-absorbing agent in a resin composition, it is preferable to use a laser beam-absorbing agent whose thermal decomposition temperature is higher than that of the resin component constituting the laser beam-absorbing layer. The art disclosed herein may be preferably practiced also in an embodiment where the laser beam-absorbing layer is essentially free of the organic compounds as the laser beam-absorbing agent. Alternatively, the laser beam-absorbing layer may further comprise the organic compounds in addition to one or both of the metal powder and the metallic compound.

The art disclosed herein can be particularly preferably practiced in an embodiment where the laser beam-absorbing layer comprises at least a metal powder as the laser beam-absorbing agent. Examples of a preferable metal powder include aluminum powder, gold powder, silver powder, copper powder, nickel powder, zinc powder, and the like. Since such a metal powder is relatively soft, when a resin composition containing the metal powder is molded (formed into film), it is less likely to damage a molding machine. It is also to its advantage that it is less likely to leave cutting residue by the laser beam. In a PSA film to be used in an embodiment where a metallic workpiece surface is adhered with the PSA film and the workpiece is cut along with the PSA film, it is preferable to use, as the laser beam-absorbing agent, a metal powder formed from a metal of the same type as the workpiece.

The art disclosed herein can be preferably practiced in an embodiment where the laser beam-absorbing layer is essentially free of a carbon powder (e.g. carbon black) as a laser beam-absorbing agent (e.g. having a carbon powder content of 0.005 % by mass or less, preferably zero). A laser beam-absorbing layer with a carbon powder as a laser beam-absorbing agent (as well as a substrate film and a PSA film having the laser beam-absorbing layer) is likely to have a blackened laser cut surface or result in visible laser cut residue. From the same reasons, with respect to a black or dark-colored metallic compound powder, it is preferably to avoid its use as a laser beam-absorbing agent or suppress its usage by combining it with a different laser beam-absorbing agent (e.g. a metal powder).

When a laser beam-absorbing agent in a powder form (a laser beam-absorbing agent powder) is used, the shape of particles constituting the powder is not particularly limited and may be, for example, in forms of flakes, spheres, needles, polyhedrons, random shapes, etc. It is usually preferable to use a laser beam-absorbing agent powder in a flake form, in a spherical shape, or in a needle shape. The average particle diameter of such a laser beam-absorbing agent powder is not particularly limited. For example, can be used a laser beam-absorbing agent powder having an average particle diameter of 0.01 $\mu$m or larger, but 20 $\mu$m or smaller (preferably 0.1 $\mu$m or larger, but 10 $\mu$m or smaller, e.g., 0.5 $\mu$m or larger, but 5 $\mu$m or smaller). An example of the laser beam-absorbing agent preferably used in the art disclosed herein is a metal powder (flaky aluminum powder, etc.) having an average particle diameter larger than 1 $\mu$m, but equal to or smaller than 5 $\mu$m. In the present description, unless otherwise specified, the term "average particle diameter" refers to a particle diameter at 50 % cumulative volume in a size distribution measured using a particle counter based on the laser scattering/diffraction method (i.e., 50 % volume average particle diameter, which may be abbreviated to "$D_{50}$" hereinafter).

In the art disclosed herein, the substrate film may have a laser beam absorbance Admin(1000,1100) of at least 20 %, or even 30 % or higher. The laser beam absorbance Amin(1000,1100) of the entire PSA film is also preferable to be 20 % or higher (e.g. 30 % or higher). Too low an Amin(1000,1100) may make it difficult to cut the substrate film (further a PSA film comprising the substrate film) by irradiation of the prescribed laser beam or to achieve high-quality cutting. The Amin(1000,1100) of the substrate film may be 100 % while it is usually 95 % or lower. From the standpoint of reducing cutting residue from the PSA film (typically residue originating primarily from the laser beam-absorbing agent), the Amin(1000,1100) of the substrate film is preferably 80 % or lower, more preferably 70 % or lower (e.g. 60 % or lower), or may be even 50 % or lower. In a substrate film consisting of multiple layers including a laser beam-absorbing layer, the laser beam-absorbing layer preferably has a laser beam absorbance Amin(1000, 1100) of 20 % or higher (e.g. 30 % or higher). The Amin(1000, 1100) of the laser beam-absorbing layer is preferably 80 % or lower (more preferably 70 % or lower, e.g., 60 % or lower), or may be even 50 % or lower.

The transmittance and reflectance of the substrate film are not particularly limited while being able to attain a preferable laser beam absorbance Amin(1000,1100) disclosed herein. Usually, at the wavelength with the lowest laser beam absorbance (in other words, at the wavelength corresponding to the Amin(11000,1100)), a preferable substrate has a prescribed laser beam transmittance T(Amin) lower than 50 %. At the wavelength with the lowest laser beam absorbance, a preferable substrate film has a prescribed laser beam reflectance R(Amin) lower than 50 % (more preferably lower than 40 %). This is because a substrate film that meets at least one (preferably both) of the T(Amin) and the R(Amin) values is likely to have a preferable laser beam absorbance Amin(1000,1100) disclosed herein.

When a laser beam-absorbing agent in a powder form (e.g. a metal powder) is used, in general, with an increasing amount of the laser beam -absorbing agent power used (e.g. increasing ratio of the laser beam-absorbing agent powder used in the resin composition forming the laser beam-absorbing layer), the transmittance tends to decrease while the reflectance tends to increase (e.g. Example 11, Example 15 described later). Thus, it is desirable to pay attention to these tendencies while selecting the type (material, shape, etc.) and amount of the laser beam-absorbing agent to obtain a preferable laser beam absorbance Amin(1000,1100) disclosed herein.

In a substrate film having a laser beam-absorbing layer (a resin layer containing a laser beam-absorbing agent) formed from a resin composition containing a laser beam-absorbing agent, examples of a material that can be used as a resin component constituting the resin layer include polyolefin resins such as polyethylene, polypropylene, ethylene-propylene copolymers, polypropylene-polyethylene blend resins, etc.; polyester resins such as polyethylene terephthalate, polybutylene terephthalate, etc., as well as vinyl chloride resins, vinyl acetate resins, polyamide-based resins and so on. A resin layer containing a laser beam-absorbing agent can be formed by typically molding a material into film, with the material being a resin composition prepared by adding a laser beam-absorbing agent to such a resin material. The molding method is not particularly limited, and can be suitably employed a heretofore known extrusion method (e.g., an inflation extrusion method), casting method, and like methods. A substrate film comprising multiple resin layers including a laser absorbing agent-containing resin layer can be obtained by employing a single method or a suitable combination of methods among a method where resin compositions corresponding to the respective resin layers are molded simultaneously (e.g., by a multi-layer inflation method), a method where the respective layers are individually molded and then adhered to each other, a method where a layer is casted on top of another pre-formed layer, and other like methods. With respect to the resin components constituting the other resin layers besides the resin layer that contains a laser beam-absorbing agent, suitable materials can be selected from those listed as examples of resin components that can be used in the laser beam-absorbing agent-containing resin layer, and the like.

The amount of the laser beam-absorbing agent (typically, a laser beam-absorbing agent in a powder form, e.g., a metal powder) contained in the laser beam-absorbing agent-containing resin layer can be, for instance, 0.01 % by mass or greater, or it is preferably 0.05 % by mass or greater or more preferably 0.1 % by mass or greater. In a preferable embodiment, the laser beam-absorbing agent-containing resin layer comprises a laser beam-absorbing agent at a ratio higher than 0.1 % by mass. When the laser beam-absorbing agent content is too high in the laser beam-absorbing agent-containing resin layer, the reflectance may become higher, making it difficult to obtain a desirable laser beam absorbance, or resulting in visible laser cutting residue. Thus, it is usually suitable that the laser beam-absorbing agent content in the laser beam-absorbing agent-containing resin layer is 10 % by mass or less, preferably 5 % by mass or less, or more preferably 3 % by mass or less (typically less than 3 % by mass). In a preferable embodiment, the laser beam-absorbing agent content in the laser beam-absorbing agent-containing resin layer is 2 % by mass or less (typically less than 2 % by mass).

The laser beam-absorbing layer in the art disclosed herein is not limited to a layer (a laser beam-absorbing agent-containing resin layer) formed from a resin composition containing a laser beam-absorbing agent as described above. For example, it may be a layer (a laser beam-absorbing agent layer) essentially consisting of a laser beam-absorbing agent. Such a laser beam-absorbing agent layer can be formed by means such as vapor deposition, spattering, coating (e.g. a dispersion containing a laser beam-absorbing agent powder dispersed in a solvent is applied and the solvent is removed to form a layer of the laser beam-dispersing agent powder) and so on. The substrate film in the art disclosed herein may have, for instance, a constitution where a laser beam-absorbing agent-containing resin layer is placed on a surface of a resin layer free of a laser beam-absorbing agent, or a constitution where a laser beam-absorbing agent layer is further placed on a surface of a laser beam-absorbing agent-containing resin layer

The substrate film may comprise optional additives as necessary. Examples of such additives include fire-retardants, anti-static agents, colorants (pigments, dyes, etc.) photostabilizing agents (radical scavengers, ultraviolet ray-absorbing agents, etc.), antioxidants, and the like.

A surface of the substrate film may be subjected as necessary to a suitable surface treatment to increase the adhesion or improve the release on an adjacently-placed material. Examples of a surface treatment to increase the adhesion include corona discharge treatment, acid treatment, ultraviolet ray irradiation, plasma treatment, primer coating, and so on. Such a surface treatment can be preferably applied to either a first face (i.e. a surface on which a PSA layer is provided) or a second face of the substrate film. A surface treatment to increase the release can be carried out with a general silicone-based, long chain alkyl-based or fluorine-based release agent, or the like. Such a surface treatment is preferably applied to the other face (back face) of the substrate film.

It is usually suitable that the substrate film has a thickness of about 10 $\mu$m to 150 $\mu$m. When it is much thinner

than 10 μm or much thicker than 150 μm, the handling properties of the substrate film or a PSA film comprising the substrate film may be likely to decrease. In a preferable embodiment, the substrate film has a thickness of 20 μm to 110 μm (more preferably 40 μm to 100 μm). In a substrate film comprising a laser beam-absorbing layer (a laser beam-absorbing agent-containing resin layer) formed from a resin composition containing a laser beam-absorbing agent, the laser beam-absorbing layer has a thickness of preferably 3 μm or larger, more preferably 5 μm or larger, or even more preferably 10 μm or larger. Of the thickness of the entire substrate film, the thickness of the laser beam-absorbing layer (in other words, the part where the laser beam-absorbing agent is located) accounts for preferably 20 % or more (e.g. 50 % or more) or more preferably 70 % or more (even 90 % or more). In a substrate film consisting of a single laser beam-absorbing agent-containing resin layer or multiple laser beam-absorbing agent-containing resin layers, the thickness of the laser beam-absorbing layer accounts for 100 % of the overall thickness of the substrate film.

In the art disclosed herein, the PSA constituting the PSA layer is not particularly limited. For instance, can be used a known acrylic PSA, rubber-based PSA, polyester-based PSA, polyurethane-based PSA, silicone-based PSA, or the like. From the standpoint of the adhesive performance and the cost, can be preferably used a rubber-based PSA or an acrylic PSA. The PSA layer may have a mono-layer constitution, or a laminate constitution consisting of two or more layers of different compositions.

A preferable acrylic PSA comprises as a base polymer (a primary component among polymer components), for instance, an acrylic polymer having a monomer composition comprising primarily an alkyl (meth)acrylate such as butyl (meth)actylate, 2-ethylhexyl (meth)acrylate, etc., and further comprising as necessary a modifying monomer copolymerizable with the alkyl (meth)acrylate. Examples of the modifying monomer include hydroxyl group-containing monomers such as 2-hydroxylethyl (meth)acrylate, etc.; carboxyl group-containing monomers such as (meth)acrylic acid, etc.; styrene-based monomers such as styrene, etc.; vinyl esters such as vinyl acetate, etc.; and the like. Such an acrylic PSA can be obtained by a commonly used polymerization method such as a solution polymerization method, an emulsion polymerization method, an ultraviolet ray (UV) polymerization method, or the like.

Examples of a rubber-based PSA include natural rubber-based PSA, synthetic rubber-based PSA and the like. Examples of a rubber-based polymer as the base polymer of a synthetic rubber-based PSA include polybutadiene, polyisoprene, butyl rubber, polyisobutylene, styrene-based elastomers such as styrene-butadiene-styrene block copolymers, styrene-ethylene/butylene-styrene block copolymers, styrene-ethylene/butylene random copolymers, etc., and others such as ethylene propylene rubber, propylene butene rubber, ethylene propylene butene rubber, and the like.

The PSA layer (in a PSA layer consisting of multiple layers, at least one layer among them) may contain a laser beam-absorbing agent. For the laser beam-absorbing agent to be contained in the PSA layer, can be suitably selected one, two or more species among those listed above as examples of the laser beam-absorbing agent that can be used for the laser beam-absorbing agent-containing resin layer constituting the substrate film, and the like. The laser beam-absorbing agent content in the PSA layer is suitably 5 % by mass or less, or preferably 3 % by mass or less (e.g., 1 % by mass or less). Too high a laser beam-absorbing agent content may result in degraded adhesive performance. The art disclosed herein can be practiced preferably in an embodiment where the PSA layer is essentially free of a laser beam-absorbing agent.

The PSA layer can contain optional additives as necessary. Examples of such additives include crosslinking agents, tackifiers, softening agents, fire retardants, anti-static agents, colorants (pigments, dyes, etc.), photostabilizing agents (radical scavengers, UV-absorbing agents, etc.), antioxidants, and so on.

The thickness of the PSA layer can be suitably selected so that adhesive performance suitable to the application of the PSA film can be obtained. Usually, the PSA layer has a thickness of suitably 0.5 μm to 50 μm or preferably 1 μm to 20 μm (e.g., 2 μm to 15 μm).

The method for providing a PSA layer on the substrate film is not particularly limited. For example, can be suitably employed a known method such as a method where a solution or a dispersion containing PSA layer-forming components dissolved in an organic solvent or dispersed in an aqueous solvent is applied to the substrate film and allowed to dry to directly form a PSA layer on the substrate film surface, a method where a PSA layer pre-formed on a release surface is transferred to the substrate film, a method where a PSA layer-forming composition and a substrate film-forming composition are co-extruded (extruded in multiple layers), or the like method.

The PSA film disclosed herein is preferable as a PSA film (PSA film for laser cutting) that is used in an application involving cutting with a laser beam (a prescribed laser beam) having a center wavelength of 1000 nm to 1100 nm. The PSA film may be cut with the prescribed laser beam either before or after its adhesion to an adherend. Examples of an embodiment where the PSA film is cut with the prescribed laser beam before its adhesion to an adherend include an embodiment as shown in Fig. 2, for example, in which while a surface of PSA layer 20 is being protected with release liner 30, a prescribed laser beam is projected onto the back face (back face 10B of resin film 10) of PSA film 1 to cut just the PSA film 1 while leaving release liner 30 as is, and an embodiment in which PSA film 1 is cut along with release liner 30. The PSA film cut into a desirable shape can be subsequently adhered to any adherend to serve a purpose such as surface protection, decoration, or labeling of the adherend, bonding to another adherend, etc. As an embodiment where the PSA film is cut with the prescribed laser beam after its adhesion to an adherend, can be cited an embodiment in which the PSA film is adhered to a surface of a workpiece and the prescribed laser beam is projected onto the back face of the PSA film to carry out a laser machining (cutting, hole-making, shaving, etc.) of the workpiece. In such an embodiment, the PSA film may be able to function as a protection film to protect a surface of the workpiece before, after or during the laser machining.

Several worked examples relating to the present invention are described below, but the present invention is not intended to be limited to these examples. In the description below, "parts" and "%" are based on the mass unless otherwise specified.

<Example 1>

0.13 % of flaky aluminum powder having 2 μm average particle diameter and 99.87 % of a low density polyethylene (available from TOSOH Corporation, trade name "PETROTHENE 186R") were processed at a resin temperature of 180 °C with a twin screw extruder (available from Toshiba Machine Co., Ltd.) to obtain pellets for a substrate. The resulting pellets were formed into film at a die temperature of 180 °C by an inflation method to obtain a 90 μm thick resin film F1.

<Example 2>

0.18 % of the aluminum powder and 99.82 % of a low density polyethylene (available from TOSOH Corporation, trade name "PETROTHENE 186R") were processed at a resin temperature of 180 °C with the extruder to obtain pellets for a substrate. The resulting pellets were formed into film at a die temperature of 180 °C by an inflation method to obtain a 90 μm thick resin film F2.

<Example 3>

0.25 % of the aluminum powder and 99.75 % of a low density polyethylene (available from TOSOH Corporation, trade name "PETROTHENE 186R") were processed at a resin temperature of 180 °C with the extruder to obtain pellets for a substrate. The resulting pellets were formed into film at a die temperature of 180 °C by an inflation method to obtain a 90 μm thick resin film F3.

<Example 4>

0.50 % of the aluminum powder and 99.50 % of a low density polyethylene (available from TOSOH Corporation, trade name "PETROTHENE 186R") were processed at a resin temperature of 180 °C with the extruder to obtain pellets for a substrate. The resulting pellets were formed into film at a die temperature of 180 °C by an inflation method to obtain a 90 μm thick resin film F4.

<Example 5>

1.50 % of the aluminum powder and 98.50 % of a low density polyethylene (available from TOSOH Corporation, trade name "PETROTHENE 186R") were processed at a resin temperature of 180 °C with the extruder to obtain pellets for a substrate. The resulting pellets were formed into film at a die temperature of 180 °C by an inflation method to obtain a 90 μm thick resin film F5.

<Example 6>

One face of resin film F4 fabricated in Example 4 was subjected to a corona discharge treatment. To the corona discharge treated surface, the PSA composition P1 described below was applied to obtain a thickness of 4 μm after dried and allowed to dry. A PSA film F6 having an acrylic PSA layer on a surface of a substrate was thus obtained.

(PSA composition P1)

A mixture containing 2-ethylhexyl acrylate, vinyl acetate and acrylic acid at a ratio of 100/80/5 was polymerized in the presence of benzoyl peroxide (polymerization initiator) in toluene to obtain an acrylic polymer having a weight average molecular weight of $60 \times 10^4$. To 100 parts of the acrylic polymer, was added and mixed 2 parts of an epoxy-based crosslinking agent (trade name "TETRAD C" available from Mitsubishi Gas Chemical Company Inc.) to obtain a PSA composition P1.

<Example 7>

One face of resin film F4 fabricated in Example 4 was subjected to a corona discharge treatment. To the corona discharge treated surface, the PSA composition P2 described below was applied to obtain a thickness of 10 $\mu$m after dried and allowed to dry. A PSA film F7 having a rubber-based PSA layer on a surface of a substrate was thus obtained.

(PSA composition P2)

To 100 parts of natural rubber, were added and mixed 70 parts of a tackifier (available from Zeon Corporation, trade name "QUINTONE A 100"), 2 parts of an anti-aging agent (trade name "NOCRAC NS-5" available from Ouchi Shinko Chemical Industrial Co., Ltd.), 3 parts of an isocyanate-based crosslinking agent (available from Nippon Polyurethane Industry Co., Ltd., trade name "CORONATE L") and toluene to obtain a rubber-based PSA composition P2.

<Example 8>

0.60 % of the aluminum powder and 99.40 % of a random polypropylene (available from Prime Polymer Co., Ltd., trade name "PRIME POLYPRO F-744NP") were processed at a resin temperature of 230 °C with the extruder to obtain pellets for a substrate. The resulting pellets were formed into film at a die temperature of 230 °C by a T-die method to obtain a 40 $\mu$m thick resin film F8.

<Example 9>

0.60 % of the aluminum powder and 99.40 % of a polybutylene terephthalate (available from Mitsubishi Engineering-Plastics Corporation, trade name "NOVADURAN 5505S") were processed at a resin temperature of 245 °C with the extruder to obtain pellets for a substrate. The resulting pellets were formed into film at a die temperature of 245 °C by a T-die method to obtain a 40 $\mu$m thick resin film F9.

<Example 10>

A low density polyethylene (available from TOSOH Corporation, trade name "PETROTHENE 186R") was formed into film at a die temperature of 180 °C by an inflation method to obtain a 60 $\mu$m thick resin film. One face of the resin film was subjected to a corona discharge treatment, and the PSA composition P1 was applied to obtain a thickness of 4 $\mu$m after dried and allowed to dry. A PSA film F10 having an acrylic PSA layer on a surface of a substrate was thus obtained.

<Example 11>

3.00 % of titanium oxide ($TiO_2$) having 0.2 $\mu$m average particle diameter and 97.00 % of a low density polyethylene (available from TOSOH Corporation, trade name "PETROTHENE 186R") were processed at a resin temperature of 180 °C with the extruder to obtain pellets for a substrate. The resulting pellets were formed into film at a die temperature of 180 °C by an inflation method to obtain a 100 $\mu$m thick resin film. One face of the resin film was subjected to a corona discharge treatment, and the PSA composition P2 was applied to obtain a thickness of 10 $\mu$m after dried and allowed to dry. A PSA film F11 having a rubber-based PSA layer on a surface of a substrate was thus obtained.

<Example 12>

0.10 % of the aluminum powder and 99.90 % of a low density polyethylene (available from TOSOH Corporation, trade name "PETROTHENE 186R") were processed at a resin temperature of 180 °C with the extruder to obtain pellets for a substrate. The resulting pellets were formed into film at a die temperature of 180 °C by an inflation method to obtain a 90 $\mu$m thick resin film F12.

<Example 13>

A random polypropylene (available from Prime Polymer Co., Ltd., trade name "PRIME POLYPRO F-744NP") was formed into film at a die temperature of 230 °C by a T-die method to obtain a 40 $\mu$m thick resin film F13.

<Example 14>

A polybutylene terephthalate (available from Mitsubishi Engineering-Plastics Corporation, trade name "NOVADURAN 5505S") was formed into film at a die temperature of 245 °C by a T-die method to obtain a 40 $\mu$m thick resin film F14.

<Example 15>

20 % of barium sulfate ($BaSO_4$) powder having 0.7 $\mu$m average particle diameter and 80 % of a polybutylene terephthalate (available from Mitsubishi Engineering-Plastics Corporation, trade name "NOVADURAN 5505S") were processed at a resin temperature of 245 °C with the extruder to obtain pellets for a substrate. The resulting pellets were formed into film at a die temperature of 245 °C by a T-die method to obtain a 40 $\mu$m thick resin film F15.

<Property Evaluations>

Samples of appropriate dimensions were cut out from the resin films and PSA films F1 to F15 fabricated above and subjected to the following evaluations.

(1) Transmittance

Measurement system: spectrophotometer under model number "U-4100" available from Hitachi High-Technologies Corporation
Measurement conditions: measurement mode-applied detection, % T data mode, 750 nm/min scan rate, 1 nm sampling interval, automated slit control, photomultiplier voltage automated at 1, intensity control mode fixed, high resolution measurement OFF, no dimming film used, PbS sensitivity at 1, 10 mm cell length.
Measurement method:

(i). The measurement system was turned on and kept in standby for 2 hours or longer to stabilize the system. Subsequently, without any sample set in, the baseline was measured.
(ii). A sample was then set in the transmittance measuring region of the measurement system (for a case of a PSA film, in such a way that the light would enter the PSA film from the back face), and under the measurement conditions shown above, the transmittance in a wavelength range of 1000 nm to 1100 nm was measured.

(2) Reflectance

Measurement system: spectrophotometer under model number "U-4100" available from Hitachi High-Technologies Corporation
Measurement conditions: measurement mode-applied detection, % R data mode, 750 nm/min scan rate, 1 nm sampling interval, automated slit control, photomultiplier voltage automated at 1, intensity control mode fixed, high resolution measurement OFF, no dimming film used, PbS sensitivity at 1, 10 mm cell length.
Measurement method:

(i). The measurement system was turned on and kept in standby for two hours or longer to stabilize the system. Subsequently, a standard white plate was set in the reflectance measuring region (with no sample set) and the baseline was measured.
(ii). A sample was then set in the reflectance measuring region. Here, in order to prevent reflection of the light that had transmitted through the sample, a resin plate under trade name "CLAREX (registered trademark)" (black-colored, 1 mm thick) available from Nitto Jushi Kogyo Co., LTD. was placed opposite to the surface on which the light entered. When the sample was a PSA film, the PSA film was adhered to the resin plate (adhering condition: 2 kg roller moved back and forth once). Under the measurement conditions shown above, the reflectance in the wavelength range of 1000 nm to 1100 nm was measured.

(3) Absorbance

Substituting the transmittance T (%) and reflectance R (%) values into the next equation: 100 (%) - T (%) - R (%); the minimum absorbance in the 1000 nm to 1100 nm wavelength range, Amin(1000, 1100), was determined. The results are shown in Table 1 along with the values of transmittance T(Amin) and reflectance R(Amin) at the wavelength of the minimum absorbance.

(4) Laser cutting

(4-1) Laser cutting (i)

Each sample (a PSA film adhered on a 1 mm thick SUS304 2B plate or a resin film with the edges being fastened with PSA tape) was set on the work support of a laser welder (model number "YLM-500P" available from Amada Co., Ltd.) and a laser beam was projected onto a prescribed cut line under the following conditions:

Laser used: YAG laser (1064 nm wavelength, 500 W output)
Beam condition: 10 m/min moving speed

(4-2) Laser cutting (ii)

Each sample (a PSA film adhered on a 1 mm thick SUS304 2B plate or a resin film with the edges being fastened with PSA tape) was set on the work support of a laser welder (model number "M802E" available from Omron Laserfront Inc.) and a laser beam was projected onto a prescribed cut line thereof under the following conditions:

Laser used: YAG laser (1.06 $\mu$m wavelength, 200 W output)
Beam condition: 5 m/min moving speed

With respect to the laser cutting (i) and the laser cutting (ii), the state of each sample after the laser beaming was observed under an optic microscope (magnified 100 $\times$) and graded the laser cuttability into the following two levels.

Good: The sample (PSA film only or resin film only) was able to be cut with a cut width equal to or larger than the laser beam diameter (good laser cuttability)
Poor: The sample (PSA film only or resin film only) could not be cut or the cut width was smaller than the laser beam diameter (poor laser cuttability).

[Table 1]

Table 1

| Ex. | Substrate | Laser beam-absorbing agent | | T | R | A | Laser cutting | |
|---|---|---|---|---|---|---|---|---|
| | | Type | Content (wt%) | (%) | (%) | (%) | (i) | (ii) |
| 1 | PE | Al powder | 0.13 | 45 | 32 | 23 | Good | Good |
| 2 | PE | Al powder | 0.18 | 34 | 33 | 33 | Good | Good |
| 3 | PE | Al powder | 0.25 | 21 | 34 | 45 | Good | Good |
| 4 | PE | Al powder | 0.50 | 9 | 35 | 56 | Good | Good |
| 5 | PE | Al powder | 1.50 | 0 | 36 | 64 | Good | Good |
| 6 | PE | Al powder | 0.50 | 9 | 34 | 57 | Good | Good |
| 7 | PE | Al powder | 0.50 | 8 | 34 | 58 | Good | Good |
| 8 | PP | Al powder | 0.60 | 10 | 35 | 55 | Good | Good |
| 9 | PBT | Al powder | 0.60 | 10 | 36 | 54 | Good | Good |
| 10 | PE | none | - | 92 | 8 | 0 | Poor | Poor |
| 11 | PE | TiO$_2$ | 3.00 | 55 | 37 | 8 | Poor | Poor |
| 12 | PE | Al powder | 0.10 | 52 | 32 | 16 | Poor | Poor |
| 13 | PP | none | - | 93 | 6 | 1 | Poor | Poor |
| 14 | PBT | none | - | 89 | 9 | 2 | Poor | Poor |
| 15 | PBT | BaSO$_4$ | 20 | 18 | 81 | 1 | Poor | Poor |
| PE: polyethylene, PP: polypropylene, PBT: polybutylene terephthalate | | | | | | | | |

As shown in Table I, samples of Examples I to 9 each having a laser beam absorbance Amin(1000, 1100) of 20 % or higher (more particularly, 20 % or higher, but 80 % or lower) all showed good laser cuttability. Among these, samples of Examples 1 to 4 and 6 to 9 each having an Amin(1000, 1100) of 60 % or lower resulted in less laser cutting residue and produced cutting with greater external appearance when compared to the sample of Example 5. On the other hand, samples of Examples 10 to 15 each having a laser beam absorbance Amin(1000, 1100) lower than 20 % all showed poor laser cuttability.

It is noted that although aluminum can absorb a laser beam at a wavelength of 1000 nm to 1100 nm, since aluminum foil and aluminum film (typically, continuous film such as vapor deposition film, etc.) has a smooth surface with a high reflectance, aluminum is generally considered as a reflective material with respect to the prescribed laser beam. According to a preferable embodiment of the art disclosed herein, by adding aluminum in a powder form (more particularly, in a flaky powder form) to the resin, the reflectance can be suppressed, and the aluminum in the powder form can be preferably used as a laser beam-absorbing agent. This is supported by the results of Examples 1 to 9 described above.

Although specific embodiments of the present invention have been described in detail above, these are merely examples and do not limit the scope of the claims. The art according to the claims includes various modifications and changes made to the specific embodiments illustrated above.

In addition, matters disclosed by this description include the following:

(1) A resin film having a laser beam absorbance of 20 % or higher in a wavelength range of 1000 nm to 1100 nm and comprising a laser beam-absorbing layer that comprises a laser beam-absorbing agent that increases the laser beam absorbance.

(2) The resin film according to (1) above, wherein the laser beam-absorbing layer comprises, as the laser beam-absorbing agent, at least one species selected from metal powders and metallic compound powders.

(3) The resin film according to (1) or (2) above, wherein the laser beam-absorbing layer satisfies the following conditions:

> the layer is formed from a resin composition (e.g. a polyolefin resin composition or a polyester resin composition) containing 0.01 to 5 % by mass of the laser beam-absorbing agent; and
> the laser beam absorbance is 20 % or higher, but 80 % or lower.

(4) The resin film according to any one of (1) to (3) above, wherein the laser beam-absorbing layer is formed from a resin composition (e.g. a polyolefin resin composition or a polyester resin composition) comprising 0.01 to 5 % by mass of a metal powder (e.g. aluminum powder) as the laser beam-absorbing agent.

(5) A laser cutting resin film consisting of the resin film according to any one of (1) to (4) above, that is to be cut with a laser beam having a center wavelength of 1000 nm to 1100 nm when in use.

The resin film according to any one of (1) to (5) above can be preferably used as a substrate in a PSA film disclosed herein.

[Reference Signs List]

1, 2: PSA film
10: resin film (substrate, substrate film)
20: PSA layer
30: release liner
42: laser beam-absorbing layer (first layer)
100: PSA film
110: resin film (substrate, substrate film)
120: basal plate (adherend)
402: laser beam-absorbing agent
LB: laser beam
W: cut width

**Claims**

1. A pressure-sensitive adhesive film comprising a resin film as a substrate, and a pressure-sensitive adhesive layer provided at least on a first face of the resin film, wherein:

   the substrate has a laser beam absorbance of 20 % or higher in a wavelength range of 1000 nm to 1100 nm, and the substrate comprises a laser beam-absorbing layer comprising a laser beam-absorbing agent that increases the laser beam absorbance.

2. The pressure-sensitive adhesive film according to Claim 1, wherein the laser beam-absorbing layer comprises, as the laser beam-absorbing agent, at least one species selected from a metal powder and a metallic compound powder.

3. The pressure-sensitive adhesive film according to Claim 1 or 2, wherein the laser beam-absorbing layer satisfies the following conditions:

   the layer is formed from a resin composition containing 0.01 to 5 % by mass of the laser beam-absorbing agent; and
   the laser beam absorbance is 20 % or higher, but 80 % or lower.

4. The pressure-sensitive adhesive film according to Claim 3, wherein the resin composition is a polyolefin resin composition or a polyester resin composition.

5. The pressure-sensitive adhesive film according to any one of Claims I to 4, wherein the laser beam-absorbing layer is formed from a resin composition comprising, as the laser beam-absorbing agent, 0.01 to 5 % by mass of a metal powder.

6. A laser cutting pressure-sensitive adhesive film consisting of the pressure-sensitive adhesive film according to any one of Claims 1 to 5, the laser cutting pressure-sensitive adhesive film being to be cut with a laser beam having a center wavelength of 1000 nm to 1100 nm when in use.

[Fig. 1]

[Fig. 2]

[Fig. 3]

[Fig. 4]

[Fig. 5]

## INTERNATIONAL SEARCH REPORT

International application No.

PCT/JP2012/062951

### A. CLASSIFICATION OF SUBJECT MATTER
*C09J7/02*(2006.01)i

According to International Patent Classification (IPC) or to both national classification and IPC

### B. FIELDS SEARCHED

Minimum documentation searched (classification system followed by classification symbols)
C09J7/02

Documentation searched other than minimum documentation to the extent that such documents are included in the fields searched

| Jitsuyo Shinan Koho | 1922–1996 | Jitsuyo Shinan Toroku Koho | 1996–2012 |
| Kokai Jitsuyo Shinan Koho | 1971–2012 | Toroku Jitsuyo Shinan Koho | 1994–2012 |

Electronic data base consulted during the international search (name of data base and, where practicable, search terms used)

### C. DOCUMENTS CONSIDERED TO BE RELEVANT

| Category* | Citation of document, with indication, where appropriate, of the relevant passages | Relevant to claim No. |
|---|---|---|
| X<br>Y | JP 2002-343747 A  (Lintec Corp.),<br>29 November 2002 (29.11.2002),<br>entire text; particularly, paragraphs [0015],<br>[0019], [0032], [0034], [0037]<br>(Family: none) | 1-4,6<br>5 |
| Y | JP 2004-064040 A  (3M Innovative Properties Co.),<br>26 February 2004 (26.02.2004),<br>paragraph [0017]<br>& US 2005/0233547 A1    & EP 1550156 A2<br>& WO 2004/006296 A2    & CN 1703773 A<br>& TW 282753 B          & AU 2003278696 A | 5 |

| [X] | Further documents are listed in the continuation of Box C. | [ ] | See patent family annex. |

| * | Special categories of cited documents: |
|---|---|
| "A" | document defining the general state of the art which is not considered to be of particular relevance |
| "E" | earlier application or patent but published on or after the international filing date |
| "L" | document which may throw doubts on priority claim(s) or which is cited to establish the publication date of another citation or other special reason (as specified) |
| "O" | document referring to an oral disclosure, use, exhibition or other means |
| "P" | document published prior to the international filing date but later than the priority date claimed |

| "T" | later document published after the international filing date or priority date and not in conflict with the application but cited to understand the principle or theory underlying the invention |
|---|---|
| "X" | document of particular relevance; the claimed invention cannot be considered novel or cannot be considered to involve an inventive step when the document is taken alone |
| "Y" | document of particular relevance; the claimed invention cannot be considered to involve an inventive step when the document is combined with one or more other such documents, such combination being obvious to a person skilled in the art |
| "&" | document member of the same patent family |

| Date of the actual completion of the international search<br>31 May, 2012 (31.05.12) | Date of mailing of the international search report<br>12 June, 2012 (12.06.12) |
|---|---|
| Name and mailing address of the ISA/<br>Japanese Patent Office | Authorized officer |
| Facsimile No. | Telephone No. |

Form PCT/ISA/210 (second sheet) (July 2009)

**INTERNATIONAL SEARCH REPORT**

International application No.

PCT/JP2012/062951

C (Continuation).  DOCUMENTS CONSIDERED TO BE RELEVANT

| Category* | Citation of document, with indication, where appropriate, of the relevant passages | Relevant to claim No. |
|---|---|---|
| X | JP 2006-175509 A (Nitto Denko Corp.), 06 July 2006 (06.07.2006), entire text; particularly, paragraphs [0016], [0022] to [0024], [0027] (Family: none) | 1-6 |

Form PCT/ISA/210 (continuation of second sheet) (July 2009)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2011135135 A
- JP 2012114796 A

- JP 2004235194 A